Europäisches Patentamt

**European Patent Office**

**Office européen des brevets**

(11) Publication number: **0 140 458**

**A1**

## (12) EUROPEAN PATENT APPLICATION

(21) Application number: **84201574.5**

(22) Date of filing: **31.10.84**

(51) Int. Cl.⁴: **A 21 C 3/02**

(30) Priority: **02.11.83 NL 8303770**

(43) Date of publication of application:
**08.05.85 Bulletin 85/19**

(84) Designated Contracting States:
**BE CH DE FR GB IT LI**

(71) Applicant: **Koninklijke Brinkers Margarinefabrieken B.V.**
**Vlamingstraat 49**
**NL-2711 AD Zoetermeer(NL)**

(72) Inventor: **Brinkers, Bernardus Hubertus C.**
**Van Calcarlaan 25**
**NL-2244 GM Wassenaar(NL)**

(72) Inventor: **Veenman, Willem Burchard Arij N.**
**Zonnedauwlaan 14**
**NL-2465 BC Rijnsaterwoude(NL)**

(74) Representative: **Boelsma, Gerben Harm, Ir. et al,**
**Octrooibureau Polak & Charlouis Laan Copes van**
**Cattenburch 80**
**NL-2585 GD Den Haag(NL)**

(54) **A device for rolling out dough.**

(57) The invention relates to a device for rolling a dough layer into a continuous sheet, comprising conveyor means for transporting a dough layer, an assembly of freely rotatable stretching rollers which have their axes parallel to one another and transverse to the conveying direction, and means for guiding said stretching rollers in an endless path having a run which is spaced from the conveyor means by a gap that decreases in the conveying direction, said conveyor means comprising at least one intake conveyor belt, a discharge conveyor belt and a number of serially arranged transport rollers between said intake and discharge conveyor belts, means being provided to drive said transport rollers either individually or in groups at respective speeds which are progressively faster in the downstream direction of dough transport, while the linear speed of the lower run of the stretching roller assembly is greater than the speed of dough transport.

0140458

Title: A device for rolling out dough.

The invention relates to a device for rolling a dough layer into a continuous sheet, comprising conveyor means for transporting a dough layer, an assembly of freely rotatable stretching rollers which have their axes parallel to one another and traverse to the conveying direction, and means for guiding said stretching rollers in an endless path having a run which is spaced from the conveyor means by a gap that decreases in the conveying direction, said conveyor means comprising at least one intake conveyor belt, a discharge conveyor belt and a number of serially arranged transport rollers between said intake and discharge conveyor belts, means being provided to drive said transport rollers either individually or in groups at respective speeds which are progressively faster in the downstream direction of dough transport, while the linear speed of the lower run of the stretching roller assembly is greater than the speed of dough transport.

A device of this type is disclosed in U.S. patent no. 4.178.147. In this well known device the drive means are designed to drive the discharge conveyor belt at a faster speed than the transport rollers arranged upstream of it. In fact such increase of travelling speed in the downstream direction of dough transport may seem a logical consequence of the progressive increase in length of the dough sheet. In practice, however, there is still the danger for the dough sheet to break, especially at the transitional areas between the sections of the conveyor means. Especially in case of high production speeds there is a risk for the thin dough sheet to break in the area between the upstream end of the discharge conveyor belt and the nearest upstream transport roller, i.e. at a location where the dough has been reduced to a rather small thickness.

Obviously the combined effect of the accelerating force applied by the stretching rollers onto the upper side of the dough layer and by the upstream end portion of the discharge conveyor belt onto the lower side of the dough layer may readily result in a tensional load in the dough which exceeds the tensional strength of the latter.

The present invention aims at improving the above device, in the sense, that the risk for break of the dough sheet in the area above referred to, is reduced to a minimum.

The improvement according to the present invention consists therein, that said drive means are adapted to drive said discharge conveyor belt at a linear speed which is slower than the peripheral speed of at least the nearest upstream transport roller or group of transport rollers. In practice the speed of the discharge conveyor belt may be reduced in comparison with the peripheral speed of the nearest upstream transport roller(s) to an extent which may be as high as 20% and even more. Tests conducted with a certain type of dough have shown very good results e.g. with a peripheral speed of 4,5 m/min. of the farmost downstream transport roller and a linear speed of the discharge conveyor belt of 2,5-3,5 m/min.

As a result of the measure according to the invention the dough material will be urged under a certain pressure from the farmost downstream transport roller onto the discharge conveyor belt and there will be some sliding movement of the dough sheet relative to the upper run of the discharge conveyor belt in the travelling direction of the dough. This will maintain the coherence on the lower side of the dough sheet which is supported by the conveyor belt and results in a stretching operation of the dough in the final stage of the rolling out trajectory which is characterized by a gradual shearing of the imaginary layers of the dough sheet one relative to another, the magnitude of which gradually increases when seen from the lower side of the dough sheet upwardly.

It will be understood, that there should be not to much resistance against a sliding movement of the dough on the upper run of the discharge belt conveyor. For this purpose flour may be put on the upper run of the conveyor belt and also use can be advantageously made of the principle disclosed in U.S. patent application no. 319,142, filed November 9, 1981, according to which the contact between the dough layer and the assembly of stretching rollers is periodically eliminated for a short period of time so as to permit the dough layer to relax while sliding a little in a direction opposite to the normal travelling direction. When using this principle with a discharge conveyor belt, of which the linear speed is, according to this invention, slower than the peripheral speed of the nearest upstream section of the dough conveyor means, a travelling motion of the dough sheet on the discharge conveyor belt is obtained, which is composed of alternating steps into and opposite to the general dough travelling direction. Due to this alternating direction of movement of the dough relative to the supporting run of the discharge conveyor belt, the danger of sticking of the dough to the discharge conveyor belt will be neglectable.

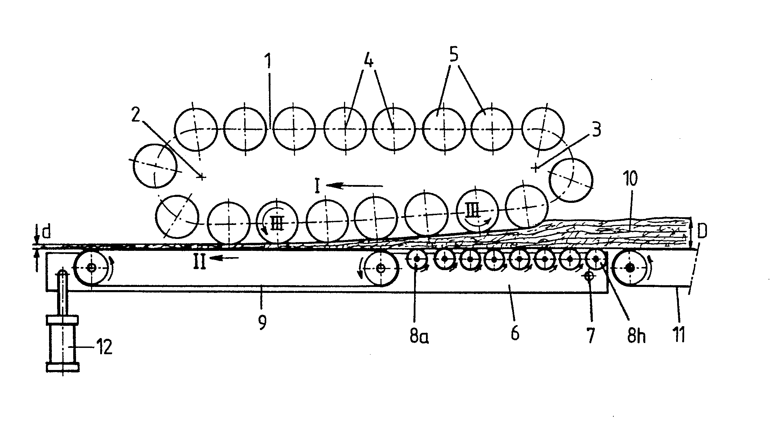

The invention will hereinafter further described by way of example with reference to the accompanying drawing.

The drawing shows a schematic longitudinal section through the device according to this invention, in which 1 designates an endless chain which is guided along two sprockets, the axes of which are indicated at 2 and 3 respectively. One of these sprockets is driven by a power source (not shown) such that the chain 1 moves in the direction of arrow I. A second chain (not shown) is arranged parallel to chain 1 and is driven in synchronism with the chain 1, while being guided along respective sprockets on shafts 2 and 3 respectively. Both chains carry a series of parallel shafts 4 on which stretching rollers 5 are mounted for free rotation. The shafts 2 and 3 are journalled in a stationary part of the machine frame which is not further shown.

At 6 a part of the machine frame is indicated which may pivot upon a shaft 7 provided on the right side of the assembly 1, 4, 5 when seen in the drawing. The frame part 6 carries a dough conveyor means which cooperates with the stretching rollers 5 and which, in the example shown in the drawing, comprises eight transport rollers 8a .... 8h, which are driven counterclockwise (when seen in the drawing) by a power source (not shown). The transmission between the power source and the rollers 8a-8h is selected so, that the peripheral speed of the rollers will gradually increase in the general dough transport direction. The conveyor means also comprises a conveyor belt 9, arranged downstream of said rollers 8a-8h and extending beyond the left end of the assembly of stretching rollers 5. The conveyor belt 9, which also functions as a discharge conveyor for the final dough sheet, is also mounted in the frame part 6 and its upper run is driven in the direction of arrow II. In the drawing the frame part 6 and the transport rollers 8a-8h and the conveyor belt 9 carried by the same are taking their effective position relative to the stretching roller assembly thereabove. In this effective position the conveyor means consisting of the transport rollers 8 and the conveyor belt 9 on one hand and the lower run of the stretching roller assembly 5 delimit a gap that decreases gradually in the conveying direction, i.e. to the left when seen in the drawing.

The dough layer 10, which is supplied by an intake conveyor belt 11 upstream of the rollers 8a-8h and has an initial thickness D, is rolled out in said gap to a final thickness d (in the order of e.g. a few millimeters). In the course of this rolling out process the stretching rollers 5 in the lower run of the stretching roller assembly will, due to their contact with the dough layer moving to the right, rotate about their axes in the direction of arrows III, while the chain 1 and the roller shafts 4 carried by the same are driven in the dough conveying direction at a speed which is faster than the peripheral speed of the farmost downstream (and consequently fastest moving) transport roller 8a. The elongation of the dough layer taking place in that section of the rolling out trajectory confined by the transport rollers 8a-8h will be smoothly "consumed" due to the gradually increasing speed of the transport rollers in the conveying direction. In this respect an assembly of transport rollers driven at gradually increasing speeds is to be preferred to a conveyor belt extending along the same trajectory. Although it may be true that the transport rollers are giving less support to the dough layer to be rolled out than a conveyor belt might give, this causes no problem along this first section of the entire rolling trajectory, where the dough layer is still relatively thick. In the section of the rolling trajectory which is covered by the conveyor belt 9 the supporting function of the conveyor belt is relatively more important than in the first section of said rolling out trajectory. Along this last section of the rolling trajectory an assembly of transport rollers would result in a less favourable operation.

In accordance with the present invention and in contrast with what is disclosed in the prior art above referred to, the conveyor belt 9 is driven at a linear speed which is substantially slower than that of the nearest downstream transport roller 8a. As a consequence of this there will be applied some pressure to the dough sheet in the transitional area between the transport rollers 8 and the conveyor belt 9, due to which the danger of breakage by excessive stretching is avoided. This pressing action is accompanied by a sliding movement of the dough sheet on the upper run of the conveyor belt 9, while the rollers 5 of the stretching roller assembly are acting upon the travelling dough layer in a way which gets near the traditional trade working of dough.

In order to further the movement of the gradually thinner getting dough sheet relative to the upper run of the conveyor belt 9 preferably use is made of the principle disclosed in U.S. Serial No. 319,142 (November 9, 1981), according to which the contact between the dough sheet and the stretching roller assembly is periodically eliminated during a short period of time, so that the dough sheet is permitted to relax and to slide a little in a direction opposite to the general conveying direction on said upper part of the conveyor belt 9. While doing so the dough sheet will be kept moving constantly relative to the upper run of the conveyor belt 9. This intermittent contact elimination is effected by a piston cylinder device 11, e.g. a pneumatic piston cylinder device, which engages the discharge end of the frame section 6, so as to move the latter from the effective position shown in the drawing into an open position, for which purpose reference is made to the above mentioned U.S. Serial No. 319,142.

**0140458**

<u>C L A I·M S</u>

1.        Device for rolling a dough layer into a continuous sheet, comprising conveyor means for transporting a dough layer, an assembly of freely rotatable stretching rollers which have their axes parallel to one another and traverse to the conveying direction, and means for guiding said stretching rollers in an endless path having a run which is spaced from the conveyor means by a gap that decreases in the conveying direction, said conveyor means comprising at least one intake conveyor belt, a discharge conveyor belt and a number of serially arranged transport rollers between said intake and discharge conveyor belts, means being provided to drive said transport rollers either individually or in groups at respective speeds which are progressively faster in the downstream direction of dough transport, while the linear speed of the lower run of the stretching roller assembly is greater than the speed of dough transport, wherein the improvement comprises drive means adapted to drive the discharge conveyor belt at a speed which is slower than the peripheral speed of at least the farmost transport roller or group of transport rollers.

2.        .        Device for rolling a dough layer into a continuous sheet, comprising conveyor means for transporting a dough layer, an assembly of freely rotatable stretching rollers which have their axes parallel to one another and traverse to the conveying direction, and means for guiding said stretching rollers in an endless path having a run which is spaced from the conveyor means by a gap that decreases in the conveying direction, said conveyor means comprising at least one intake conveyor belt, a discharge conveyor belt and a number of serially arranged transport rollers between said intake and discharge conveyor belts, means being provided to drive said transport rollers either individually or in groups at respective speeds which are progressively faster in the downstream direction of dough transport, while the linear speed of the lower run of the stretching roller assembly is greater than the speed of dough transport, whereby the stretching roller assembly on one hand and the conveyor means on the other hand are mounted in frame sections, which are movable one relative to the other in the sense of a larger and smaller gap height, means being provided to perform said movement intermittently, the improvement comprising drive means adapted to drive the discharge conveyor belt at a speed which is slower than the peripheral speed of at least the farmost transport roller or group of transport rollers.

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | NL-A-7 700 774 (RHEON) <br> * page 4, lines 3-26; figure 1 * <br> & US - A - 4 178 147 (Cat. D) | 1,2 | A 21 C 3/02 |
| Y | GB-A- 868 183 (WILRICH) <br> * page 2, lines 24-35; figures 1,2 * | 1,2 | |
| Y,D | NL-A-8 000 030 (BRINKERS) <br> * page 5, claim 3 * | 2 | |
| A | GB-A-1 166 454 (SIRA) | | |

---

TECHNICAL FIELDS SEARCHED (Int. Cl. ³)

A 21 C

The present search report has been drawn up for all claims

| Place of search <br> THE HAGUE | Date of completion of the search <br> 23-01-1985 | Examiner <br> VROMMAN L.E.S. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82